# EUROPEAN PATENT SPECIFICATION

(11) **EP 1 320 206 B1**
(45) Date of publication and mention of the grant of the patent: **12.03.2008**
(21) Application number: 01403263.5
(22) Date of filing: 13.12.2001
(51) Int. Cl.: H04B 10/155

(54) **Laser transmitter and process for transmitting controlled light signals**
Lasersender und Verfahren zur Übertragung von gesteuerten optischen Signalen
Emetteur à laser et procédé de transmission de signaux optiques contrôlés

(43) Date of publication of application: 18.06.2003
(73) Proprietor: Alcatel Lucent, 75008 Paris (FR)
(72) Inventor: Gilon, Edith Béatrice Louise, 1030 Brussels (BE); de Meulenaere, Paul Gilbert Regina, 2650 Edegem (BE); Vetter, Peter Johannes, 2018 Antwerp (BE); Qiu, Xing Zhi, 9030 Gent (BE); Vandewege, Jan Alfons Oda Maria, 9030 Gent (BE)
(74) Representative: Narmon, Gisèle Marie Thérèse

(56) References cited:
- EP-A2- 1 096 707
- DE-A1- 19 929 571
- GB-A- 2 322 025

## Description

This invention relates to a laser transmitter comprising a laser diode adapted to convert an input current into a light signal containing data information to be sent on an optical fiber, a monitoring photodiode adapted to receive a small part of said light signal and to derive therefrom an output current and regulation means adapted for receiving said output current and for sending a signal to a current driver for regulating said input current as a function of said output current, which further comprises pattern detection means connected to the regulation means.

The ratio between output light of the laser diode and the current of the photodiode is roughly linear. The monitoring of the current from the photodiode permits to adapt the current fed in the laser diode to obtain the expected light in the fiber. The laser driver comprises the regulation means receiving the output current from the monitoring diode and the current driver sending the input current to the laser diode.

The regulation time of the laser diode, i.e. the delay to obtain the expected light in the fiber, depends on the initial currents given to the laser diode and on the regulation speed.

Regulation time is a major problem for laser transmitters, especially in burst-mode transmission. Indeed, in burst-mode transmission, the power regulation is more complicated than in conventional continuous mode, as the regulation can not be done on the average power and needs to take place in a short timeslot.

A known burst-mode laser driver with regulation means uses a binary tree search between zero and the maximum current allowed in the diode, for controlling the power regulation. Another laser driver on the market uses an incremental regulation.

With these known laser drivers, the regulation time for the laser diode is too long, whereby the output light does fit the expected light in the fibers too slowly.

Moreover, during the power set-up of Burst mode laser drivers, the laser diode transmits control cells (for example PLOAM or Physical Layer Operation Administration and Maintenance) prior to the data cells in order to adjust the transmission power of the Optical Network Termination. Each cell comprises in its payload a Laser Control Field (LCF) that has a particular pattern allowing the power regulation of the laser driver.

Laser transmitters are thus known with means detecting this particular pattern.

However a long series of ten or more PLOAM cells have to be transmitted to adjust the transmission power. The power set-up phase is therefore relatively long and a long waiting time is required before the data cells can be transmitted.

The present invention has for object a laser transmitter enabling a shorter regulation time, i.e. whereby the output light fits quicker the expected light.

This object is reached according to the invention by the fact that the laser transmitter comprises at least one register adapted to store data to be used by the regulation means for performing the regulation of said input current, and that said pattern detection means are adapted to scan all the traffic and thus all the packets of the upstream flow to the laser diode to check whether pre-determined bit-patterns are present.

The regulation time is shorter because the values of the initial current given to the laser diode are better estimated, this is closer to the final value, and the regulation process is more efficient and faster.

The register is adapted to be written as well as to be read by external means, for instance a serial interface.

In this case, the register is preferably adapted to permit data to be read by the regulation means, and that the regulation means are adapted to permit data, for instance results of the regulation, to be written and stored in the register.

The data stored in the register may thus be information written by a suitable serial interface or "results" from the regulation itself.

The data stored in the register may comprise different parameters, such as current presets for different temperatures, monitoring current references, coupling factor between laser diode and monitoring photo diode, monitoring capacitance, value of temperature, or current settings or other parameters.

Preferably, the data stored in the register result from prior analysis or tests, for example from one or more of the following data: data sheets, statistics, statistical studies of the optical modules, optical calibration, extrapolations.

The register may be a memory or a system for reading a memory support, for example an external memory.

Referring to the scan of the traffic, as not only the LCF of control cells (PLOAM) is used for adjusting the power settings, but other patterns in these control cells or even in other packets such as a in data cells or programmable cells, less control cells are required for ensuring a good initial regulation within a short lapse of time. The regulation time is shortened.

Since the laser transmitter comprises at least one register as well as pattern detection means, the time reductions for regulation obtained by each of these items are added up.

The invention also relates to a process for transmitting controlled light signals from a laser diode on an optical fiber, according to which a small part of the light signal of the laser diode is sent to a monitoring photo diode which converts it to an output current and this output current is monitored and used in regulation means which send a control signal to a current driver for adapting the input current to the laser diode.

According to the invention, this process is characterized in that, at least for a first initialization step, data are sent to the regulation means from at least one register wherein these data are stored, and the input current to the laser diode is adapted taking into account these data, and in that at least one predetermined bit-pattern is detected in the upstream flow of packets to the laser diode and this information is also used for regulating the input current to the laser diode.

Also detecting whether a predetermined bit-pattern is present in any type of packets permit to decrease the regulation time.

Other details and characteristics of laser transmitters of the invention will appear from the following description in which reference is made to the attached drawings, wherein:
Figure 1 is a block diagram of a laser transmitter according to the invention;
Figures 2 and 3 are block diagrams similar to the one of figure 1, but pertaining to other embodiments; Figure 4 is a further block diagram of a practical application of a laser transmitter of the invention.

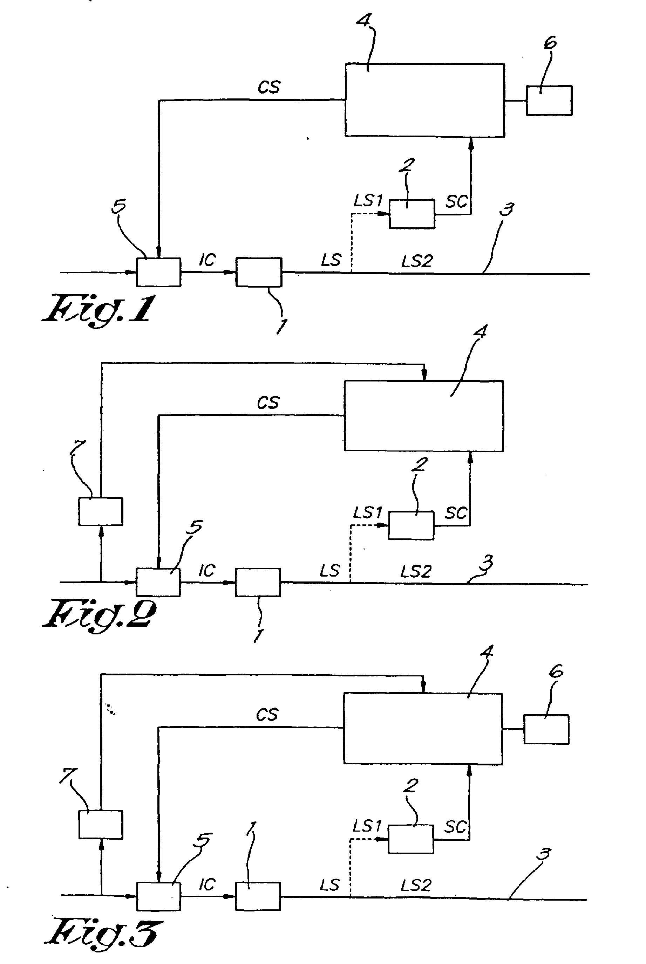

The laser transmitter shown in figure 1 comprises:
a laser diode 1 receiving an input current IC and emitting a light signal LS;
a photo diode 2 receiving a small part LS1 of the light signal LS and converting said part in a small outlet current SC;
an optical fiber 3 receiving the main light LS2;
regulation means 4 receiving the small outlet current SC and emitting a regulating or control signal CS to a control system or current driver 5 controlling the value of the input current IC.

The regulation means 4 are connected to at least one register 6. This register 6 may be a memory or a system for reading a memory support, for instance an external memory. The register 6 contains various information or data with high speed access, such as current presets for different temperatures, monitoring current references, coupling factor between laser diode 1 and monitoring photo diode 2, monitoring capacitance, a measured value of temperature, current settings etc.

This information results from prior analysis or tests, for example from data sheets, statistics, statistical studies of the optical modules, optical calibration, extrapolations, etc.

The data are written in the register 6, either, by a suitable serial interface, or by the regulation means 4. In the first case the data are read by the regulation means 4 and in the second case the data, for instance results of the regulation, are read by a suitable serial interface.

The data stored in the register may be modified during operation. At the beginning they receive for instance a value (for example chosen or determined by calibration and/or extrapolation), but during operation, the value may possibly be modified.

After receiving an initial input current IC, the laser diode 1 emits a light signal LS, whereby the photodiode 2 emits a small current SC to the regulation means 4. In these regulation means 4, the control signal CS is determined in function of one or more data from the register 6 corresponding to the small output current SC.

The determination can be a direct determination, i.e. the control signal CS is directly furnished from the register 6 for the small output current SC, or an indirect determination (computing step). The control signal CS is then used for controlling the initial input current IC provided to the laser diode 1.

Some data stored in the register 6 may be read by external means, for example a suitable serial interface.

As due to the information of the register 6 the input current IC will have a better value and a better choice of the speed regulation is possible, the laser diode 1 produces faster an optimal light. An optimal light is a light the characteristics of which correspond to the characteristics of the expected light to be sent into the fiber 3.

The regulation time is very short. The register 6 will be as accurate as possible in order to produce the best possible immediate control signal CS.

Figure 2 is a block diagram of another embodiment of a laser transmitter according to the invention.

This embodiment comprises also
a laser diode 1 receiving an input current IC and emitting a light signal LS;
a monitoring photo diode 2 receiving a part LS1 of the light signal LS and converting said part in a small current SC;
an optical fiber 3 receiving the remaining light LS2;
regulation means 4 receiving the small output current SC and emitting a control signal CS to a control system or current driver 5 controlling the value of the input current IC;
but instead of one or more registers 6, it contains a pattern detection means 7 adapted for detecting predetermined patterns in all packets of the upstream flow to the laser diode 1 and for furnishing a signal to the regulation means 4.

The detection means 7 are scanning means enabling to extract the maximum possible set-up information from monitoring the upstream traffic.

Such detection means 7 scan all packets and are adapted for detecting one or more bit-patterns which are substantially identical to the predetermined bit-pattern.

All packet types may be scanned, partially or completely. Preferably complete packets are scanned. The scanned packets may be as well control cells (PLOAM) as data cells or programmable cells or a combination thereof.

Indeed, the determined bit-pattern detectable by the pattern detection means 7 must not necessarily be comprised in control cells. It may also be contained in a data cell or a programmable cell.

Each PLOAM or control cell comprises a laser control field (LCF), as well as other fields in which the presence of bit-patterns (typically long series of zeroes or ones).

As more than the LCF pattern of the control or PLOAM cells is used for adjusting the power settings, less control cells are required for ensuring a good initial regulation within a short lapse of time. The regulation time is shortened.

It has been observed that with the scanning detection means 7, less than five, for example two to four, control cells are sufficient for ensuring an accurate and adequate regulation via the regulation means 5.

The detection means 7 can possibly be integrated in the regulation means 4.

If the packets are programmable cells, these cells enable to define specific field to be analyzed. The programmable cells are for example adapted for receiving one or more specific patterns, which are thereafter detected or compared in the detection means 7.

The embodiment of figure 3 is similar to the one of figure 1, except that the regulation means 4 are not only connected to a register 6 but also connected to a pattern detection means 7 as in the embodiment of figure 2.

As soon as the regulation means 4 receive a signal from the pattern detection means 7 that a predetermined bit-pattern has been detected in the packets, the control signal CS is determined by the regulation means 4 taking into account the data from the register 6, at least for the initialization step.

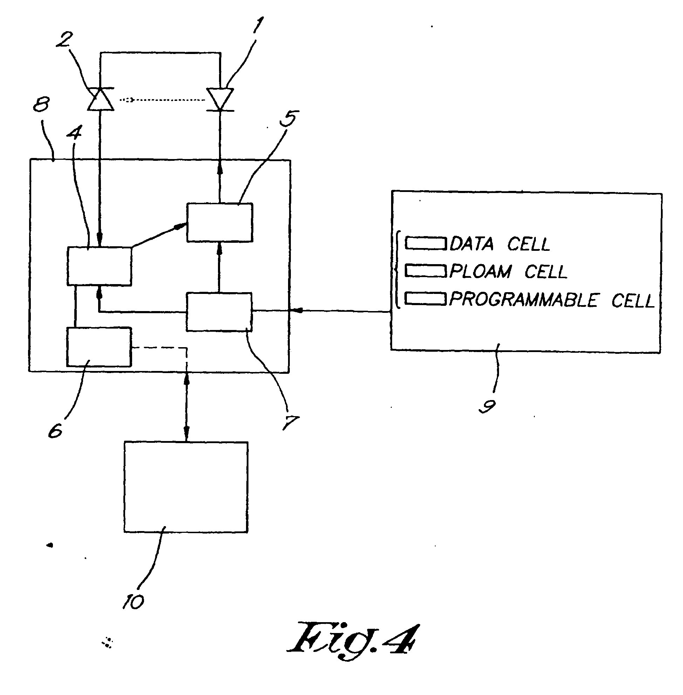

Figure 4 is a schematic view of practical embodiment of a laser transmitter comprising a burst driver 8 connected to a laser diode 1 and a photodiode 2, as well as to an APON network termination 9 able to send data cells, PLOAM cells and programmable cells.

The burst driver 8 comprises regulation means 4 receiving the output signal SC of the photo diode 2 and sending a control signal CS to the control system or current driver 5 controlling the input current of the laser diode 1 at least during the initialization step.

The burst driver 8 also comprises a pattern detection means 7 and the cells of the network termination 9 are sent over the current driver 5 to the laser diode 1 and to the pattern detection means 7. These detection means 7 give indications about the presence of a pattern in the cells to the regulation means 4.

The burst driver also comprises a register 6 in connection with the regulation means 4 and a serial interface 10 connected to the register 6 and adapted to read and write in the register 6. Data are written in the register 6 by the serial interface 10 and read by the regulation means 4. Data could also be written in the register 6 by the regulation means 4 and read by the serial interface 10.

## Claims

1. Laser transmitter comprising a laser diode (1) adapted to convert an input current (IC) into a light signal (LS) containing data information to be sent on an optical fiber (3), a monitoring photodiode (2) adapted to receive a small part (LS1) of said light signal and to derive therefrom an output current (SC) and regulation means (4) adapted for receiving said output current and for sending a signal (CS) to a current driver (5) for regulating said input current (IC) as a function of said output current (SC), which further comprises pattern detection means (7) connected to the regulation means,
***characterized in that*** the laser transmitter comprises at least one register (6) adapted to store data to be used by the regulation means (4) for performing the regulation of said input current (IC)
***and in that*** said pattern detection means (7) are adapted to scan all the traffic and thus all the packets of the upstream flow to the laser diode (1) to check whether pre-determined bit-patterns are present.

2. Laser transmitter according to claim 1, **characterized in that** the register (6) is adapted to be written as well as to be read by external means, for instance a serial interface (10).

3. Laser transmitter according to claim 1, **characterized in that** the register (6) is preferably adapted to permit data to be read by the regulation means (4), and **in that** the regulation means are adapted to permit data, for instance results of the regulation, to be written and stored in the register (6).

4. Laser transmitter according to claim 1, ***characterized in that*** the data stored in the register (6) comprise different parameters, such as current presets for different temperatures, monitoring current references, coupling factor between laser diode and monitoring photo diode, monitoring capacitance, value of temperature, current settings or a combination thereof.

5. Laser transmitter according to claim 1, ***characterized* in that** the data stored in the register (6) result from prior analysis or tests, such as data sheets, statistics, statistical studies of the optical modules, optical calibration, extrapolations.

6. Laser transmitter according to claim 1, ***characterized* in that** the register (6) comprises at least one memory or a system for reading a memory support, such as an external memory.

7. Laser transmitter according to claim 1, **characterized in that** the pattern detection means (7) are adapted to scan partially or completely incoming cells, such as data cells, control cells (PLOAM) and programmable cells.

8. Process for transmitting controlled light signals from a laser diode (1) on an optical fiber (3), according to which a small part (LS1) of the light signal (LS) of the laser diode (1) is sent to a monitoring photo diode (2) which converts it to an output current (SC) and this output current is monitored and used in regulation means (4) which send a control signal (CS) to a current driver (5) for adapting the input current (IC) to the laser diode (1),
***characterized in that***, at least for a first initialization step, data are sent to the regulation means (4) from at least one register (6) wherein these data are stored, and the input current (IC) to the laser diode (1) is adapted taking into account said data,
***and in* that** at least one predetermined bit-pattern is detected in the upstream flow of packets to the laser diode (1) and this information is used, together with said data, for regulating the input current (IC) to the laser diode (1).

9. Process according to claim 8, **characterized in that** data stored in the register (6) are read by external means, for instance a serial interface (10).

## Patentansprüche

1. Lasersender, der eine Laserdiode (1) enthält, die angepasst ist, einen Eingangsstrom (IC) in ein Lichtsignal (LS) umzuwandeln, das Daten-Informationen enthält, die auf einer optischen Faser (3) zu senden sind, eine Überwachungs-Fotodiode (2), die angepasst ist, einen kleinen Teil (LS1) des Lichtsignals zu empfangen und daraus einen Ausgangsstrom (SC) abzuleiten, und Regelungs-Einrichtungen (4), die angepasst sind, den Ausgangsstrom zu empfangen und ein Signal (CS) an einen Strom-Treiber (5) zu senden, um den Eingangsstrom (IC) als Funktion des Ausgangstroms (SC) zu regeln, und der ferner Muster-Erkennungs-Einrichtungen (7) enthält, die an die Regelungs-Einrichtungen angeschlossen sind,
**dadurch gekennzeichnet, dass** der Lasersender mindestens ein Register (6) enthält, das angepasst ist, Daten zu speichern, die von den Regelungs-Einrichtungen (4) zu verwenden sind, um die Regelung des Eingangsstroms (IC) durchzuführen,
und **dadurch**, dass die Muster-Erkennungs-Einrichtungen (7) angepasst sind, den gesamten Verkehr und somit alle Pakete des Upstream-Flusses zur Laserdiode (1) abzutasten, um zu überprüfen, ob vorher festgelegte Bitmuster vorhanden sind.

2. Lasersender gemäß Anspruch 1, **dadurch gekennzeichnet, dass** das Register (6) angepasst ist, durch externe Einrichtungen, zum Beispiel durch eine serielle Schnittstelle (10) geschrieben, als auch gelesen zu werden.

3. Lasersender gemäß Anspruch 1, **dadurch gekennzeichnet, dass** das Register (6) vorzugsweise angepasst ist, es zuzulassen, dass Daten von den Regelungs-Einrichtungen (4) gelesen werden, und dass die Regelungs-Einrichtungen angepasst sind, es zuzulassen, dass Daten, zum Beispiel Ergebnisse der Regelung, in das Register (6) geschrieben und dort gespeichert werden.

4. Lasersender gemäß Anspruch 1, **dadurch gekennzeichnet, dass** die in dem Register (6) gespeicherten Daten verschiedene Parameter umfassen, wie z.B. Strom-Voreinstellungen für verschiedene Temperaturen, Überwachungs-Strom-Referenzwerte, Kopplungsfaktor zwischen Laserdiode und Überwachungs-Fotodiode, Überwachungs-Kapazität, Wert der Temperatur, Stromeinstellungen oder eine Kombination daraus.

5. Lasersender gemäß Anspruch 1, **dadurch gekennzeichnet, dass** die in dem Register (6) gespeicherten Daten aus einer vorherigen Analyse oder aus Tests, wie z.B. aus Datenblättern, Statistiken, statistischen Untersuchungen der optischen Module, optischer Kalibrierung, Extrapolationen, resultieren.

6. Lasersender gemäß Anspruch 1, **dadurch gekennzeichnet, dass** das Register (6) mindestens einen Speicher oder ein System zum Lesen eines Speichers, wie z.B. eines externen Speichers, enthält.

7. Lasersender gemäß Anspruch 1, **dadurch gekennzeichnet, dass** die Mustererkennungs-Einrichtungen (7) angepasst sind, eintreffende Zellen, wie z.B. Datenzellen, Steuerzellen (PLOAM) und programmierbare Zellen, teilweise oder vollständig abzutasten.

8. Prozess zum Senden gesteuerter Lichtsignale von einer Laserdiode (1) auf einer optischen Faser (3), entsprechend dem ein kleiner Teil (LS1) des Lichtsignals (LS) der Laserdiode (1) an eine Überwachungs-Fotodiode (2) gesendet wird, die ihn in einen Ausgangsstrom (SC) umwandelt, und dieser Ausgangsstrom wird überwacht und in Regelungs-Einrichtungen (4) benutzt, die ein Steuersignal (CS) an einen Strom-Treiber (5) senden, um den Eingangsstrom (IC) der Laserdiode (1) anzupassen,
**dadurch gekennzeichnet, dass** mindestens für einen ersten Initialisierungsschritt Daten von mindestens einem Register (6), in dem diese Daten gespeichert sind, zu den Regelungs-Einrichtungen (4) gesendet werden, und der Eingangsstrom (IC) der Laserdiode (1) angepasst wird, wobei diese Daten berücksichtigt werden,
und **dadurch**, dass mindestens ein vorher festgelegtes Bitmuster im Upstream-Paketfluss zur Laserdiode (1) erkannt wird, und
dass diese Information zusammen mit den Daten dazu benutzt wird, den Eingangsstrom (IC) zur Laserdiode (1) zu regeln.

9. Prozess gemäß Anspruch 8, **dadurch gekennzeichnet, dass** in dem Register (6) gespeicherte Daten durch externe Einrichtungen, zum Beispiel eine serielle Schnittstelle (10) gelesen werden.

## Revendications

1. Emetteur à laser comprenant une diode laser (1) adaptée pour convertir un courant d'entrée (IC) en un signal optique (LS) contenant des informations de données devant être envoyées dans une fibre optique (3), une photodiode de surveillance (2) adaptée pour recevoir une petite partie (LS1) dudit signal optique et pour en déduire un courant de sortie (SC) et des moyens de régulation (4) adaptés pour recevoir ledit courant de sortie et pour envoyer un signal (CS) à un amplificateur de courant (5) afin de réguler ledit courant d'entrée (IC) en fonction dudit courant de sortie (SC), lequel comprend en outre des moyens de détection de combinaison (7) connectés aux moyens de régulation,
**caractérisé en ce que** l'émetteur à laser comprend au moins un registre (6) adapté pour stocker des données devant être utilisées par les moyens de régulation (4) pour effectuer la régulation dudit courant d'entrée (IC),
et **en ce que** lesdits moyens de détection de combinaison (7) sont adaptés pour analyser tout le trafic et donc tous les paquets du flux en sens montant vers la diode laser (1) afin de vérifier si des combinaisons binaires prédéterminées sont présentes.

2. Emetteur à laser selon la revendication 1, **caractérisé en ce que** le registre (6) est adapté pour être écrit ainsi que lu par des moyens externes, par exemple une interface série (10).

3. Emetteur à laser selon la revendication 1, **caractérisé en ce que** le registre (6) est de préférence adapté pour permettre que les données soient lues par les moyens de régulation (4), et **en ce que** les moyens de régulation sont adaptés pour permettre que les données, par exemple des résultats de la régulation, soient écrites et stockées dans le registre (6).

4. Emetteur à laser selon la revendication 1, **caractérisé en ce que** les données stockées dans le registre (6) comprennent différents paramètres, tels que des préréglages de courant pour différentes températures, des références de courant de surveillance, un facteur de couplage entre la diode laser et la photodiode de surveillance, une capacité de surveillance, une valeur de température, des réglages de courant ou une combinaison de ceux-ci.

5. Emetteur à laser selon la revendication 1, **caractérisé en ce que** les données stockées dans le registre (6) résultent d'une analyse ou de tests antérieurs, tels que des fiches techniques, des statistiques, des études statistiques des modules optiques, un calibrage optique, des extrapolations.

6. Emetteur à laser selon la revendication 1, **caractérisé en ce que** le registre (6) comprend au moins une mémoire ou un système pour lire un support de mémoire, tel qu'une mémoire externe.

7. Emetteur à laser selon la revendication 1, **caractérisé en ce que** les moyens de détection de combinaison (7) sont adaptés pour analyser partiellement ou complètement des cellules arrivantes, telles que des cellules de données, des cellules de commande (PLOAM) et des cellules programmables.

8. Procédé de transmission de signaux optiques commandés d'une diode laser (1) dans une fibre optique (3), selon lequel une petite partie (LS1) du signal optique (LS) de la diode laser (1) est envoyée à une photodiode de surveillance (2) qui la convertit en un courant de sortie (SC) et ce courant de sortie est surveillé et utilisé dans des moyens de régulation (4) qui envoient un signal de commande (CS) à un amplificateur de courant (5) pour adapter le courant d'entrée (IC) à la diode laser (1),
**caractérisé en ce que**, au moins pour une première étape d'initialisation, des données sont envoyées aux moyens de régulation (4) depuis au moins un registre (6) dans lequel ces données sont stockées, et le courant d'entrée (IC) vers la diode laser (1) est adapté en tenant compte desdites données,
et **en ce que** au moins une combinaison de bits prédéterminée est détectée dans le flux en sens montant de paquets vers la diode laser (1) et ces informations sont utilisées, conjointement aux dites données, pour réguler le courant d'entrée (IC) vers la diode laser (1).

9. Procédé selon la revendication 8, **caractérisé en ce que** des données stockées dans le registre (6) sont lues par des moyens externes, par exemple une interface série (10).
